# EUROPÄISCHE PATENTSCHRIFT

(11) **EP 1 851 069 B1**
(45) Veröffentlichungstag und Bekanntmachung des Hinweises auf die Patenterteilung: **21.10.2015**
(21) Anmeldenummer: 06706603.5
(22) Anmeldetag: 03.02.2006
(51) Int. Cl.: B44C 1/17, B29C 45/14, B32B 1/00, B32B 3/00, B29C 45/16, G02B 5/00, G03H 1/00

(54) **MEHRSCHICHTFOLIE, DAMIT DEKORIERTER SPRITZGUSSARTIKEL UND VERFAHREN ZUR HERSTELLUNG DES DEKORIERTEN SPRITZGUSSARTIKELS**
MULTI-LAYER FILM, INJECTION MOULDED ARTICLE THAT IS DECORATED WITH SAID FILM AND METHOD FOR PRODUCING THE DECORATED INJECTION MOULDED ARTICLE
FILM A PLUSIEURS COUCHES, ARTICLE MOULE PAR INJECTION DECORE DUDIT FILM ET PROCEDE DE PRODUCTION DE L'ARTICLE MOULE PAR INJECTION DECORE

(30) Priorität: 10.02.2005 DE 102005006074
(43) Veröffentlichungstag der Anmeldung: 07.11.2007
(73) Patentinhaber: Leonhard Kurz Stiftung & Co. KG, 90763 Fürth (DE)
(72) Erfinder: HIRSCHFELDER, Andreas, 90766 Fürth (DE); HEINRICH, Matthias, 90431 Nürnberg (DE); SCHILLING, Andreas, CH-6332 Hagendorn (CH)
(74) Vertreter: Zinsinger, Norbert
(86) Internationale Anmeldenummer: PCT/EP2006/000934
(87) Internationale Veröffentlichungsnummer: WO 2006/084631

(56) Entgegenhaltungen:
- DE-A1- 10 144 259
- DE-A1- 10 236 810
- DE-C1- 4 313 521
- GB-A- 2 323 554
- US-A- 5 635 282
- PATENT ABSTRACTS OF JAPAN Bd. 1998, Nr. 12, 31. Oktober 1998 (1998-10-31) & JP 10 180801 A (NISSHA PRINTING CO LTD), 7. Juli 1998 (1998-07-07)
- BLAESI B ET AL: "ENTSPIEGELN MIT MOTTENAUGENSTRUKTUREN SPRITZGIESSEN FUNKTIONALER MIKROSTRUKTURIERTER OBERFLAECHEN" KUNSTSTOFFE, CARL HANSER VERLAG, MUNCHEN, DE, Bd. 92, Nr. 5, Mai 2002 (2002-05), Seiten 50-53, XP001116637 ISSN: 0023-5563

## Beschreibung

Die Erfindung betrifft eine Mehrschichtfolie zum Hinterspritzen mit einem flüssigen Kunststoff in einem Inmold-Verfahren zur Herstellung eines dekorierten Spritzgussartikels, insbesondere mit gekrümmten Oberflächen, wobei die Mehrschichtfolie mindestens eine Replizierlackschicht aufweist, welche mindestens auf einer ihrer Oberflächen eine, einen visuell wahrnehmbaren und/oder technischen Effekt erzeugende räumliche Struktur aufweist, wobei an mindestens eine Oberfläche mit räumlicher Struktur angrenzend bereichsweise oder zumindest bereichsweise eine Kontrastschicht, die vorzugsweise als Reflexionsschicht ausgebildet ist, angeordnet ist. Die Erfindung betrifft weiterhin einen dekorierten Spritzgussartikel mit einem spritzgegossenen Kunststoffkörper, dessen Oberfläche zumindest bereichsweise in einem Inmold-Verfahren mit einer derartigen Mehrschichtfolie versehen ist und ein Verfahren zur Herstellung des dekorierten Spritzgussartikels.

Dekorationsverfahren für Spritzgussteile, bei welchen eine, gegebenenfalls bereits vorgeformte, Mehrschichtfolie in einer Spritzgussform angeordnet wird und die Spitzgussform mit Kunststoffspritzmasse gefüllt wird, wobei eine feste Verbindung zwischen der Kunststoffspritzmasse und der Mehrschichtfolie ausgebildet wird, werden üblicherweise bei nicht vorgeformten Mehrschichtfolien als InmoldDekorationsverfahren beziehungsweise IMD-Spritzgussverfahren oder bei vorgeformten Mehrschichtfolien als Inmold-Labeling-Verfahren beziehungsweise IML-Verfahren bezeichnet.

Derartige dekorierte Spritzgussartikel, Verfahren zu deren Herstellung sowie Inmold-fähige Mehrschichtfolien sind an sich bekannt.

Die DE 102 36 810 A1 offenbart teilstrukturierte Mehrschichtfolien, die zum Einsatz in Spritzgussformen geeignet sind. Eine derartige IMD-fähige Mehrschichtfolie bzw. eine Mehrschichtfolie zur Inmold-Dekoration von Spritzgussformteilen weist eine Trägerfolie mit einem dekorativen Element zur Übertragung auf das Spritzgussformteil auf. Die Trägerfolie wird nach Aufbringen des dekorativen Elements auf den Spritzgusskörper entfernt. Das dekorative Element weist eine Ablöseschicht, eine Schutzlackschicht, eine Strukturschicht mit einer räumlichen Struktur, eine Zwischenschicht, eine Reflexionsschicht und eine Kleberschicht auf. Die Ablöseschicht dient dabei zum Ablösen des dekorativen Elements vom Träger und besteht üblicherweise aus einem Wachsmaterial.

Die DE 102 21 482 C1 offenbart eine Vorrichtung zum Herstellen eines Formteils aus einem aushärtenden Spritzgussmaterial, das durch Inmold-Spritzen mit einer, eine Trägerfolie und eine Dekorlage aufweisenden Mehrschicht- beziehungsweise Prägefolie dekoriert wird. Die Prägefolie wird dabei in das Spritzwerkzeug eingelegt, wobei die Dekorlage der Prägefolie einem Formoberteil zugewandt wird. Beim Einspritzen des Spritzgussmaterials durch einen Einspritzkanal in den Spritzgussform-Hohlraum der Vorrichtung wird die Prägefolie an die Sichtseite des gespritzten Formteils angeschmiegt. Die Prägefolie verbindet sich dabei mit dem Spritzgussmaterial, welches nach dem Aushärten aus der Spritzgussform entnommen wird. Nach Abziehen der Trägerfolie von der Dekorlage ist das dekorierte Formteil fertiggestellt. Derartig dekorierte Spritzgussartikel werden insbesondere bei Automobilinnenteilen wie Türleisten, Leisten in Instrumententafeln, Ganghebelblenden, Mittelkonsolenblenden sowie bei Automobilaußenteilen wie Türrammschutzleisten, Abdeckungen an A-, B- und C-Säulen sowie im Audio- und Video-Bereich bei Dekorleisten am Gehäuse von Radios und Fernsehgeräten verwendet. Eine Vielzahl weiterer Anwendungsgebiete ist möglich.

Wie die JP 62128720 A offenbart, werden IMD-Folien üblicherweise über ein Folienvorschubgerät zwischen ein festes und ein bewegliches Teil der Spritzgussform geführt. Im Fall von Einzelbilddarstellungen im Bereich der aufzukaschierenden Dekorfolie wird die IMD-Folie außerdem über Sensoren und Positionsmarkierungen auf der IMD-Folie lagerichtig zur Spritzgussform positioniert, bevor die Spritzgussform geschlossen und die IMD-Folie mit der heißen Kunststoffspritzmasse hinterspritzt wird.

Es ist nun Aufgabe der Erfindung, eine Mehrschichtfolie bereitzustellen, durch welche die optische Qualität und Gebrauchstüchtigkeit von im Inmold-Verfahren mit Mehrschichtfolien dekorierten Spritzgussartikeln verbessert wird. Weiterhin soll ein Verfahren zur Herstellung von im Inmold-Verfahren mit Mehrschichtfolien dekorierten Spritzgussartikeln bereitgestellt werden, welches die Herstellung solcher dekorierter Gegenstände mit verbesserter optischer Qualität und Gebrauchstüchtigkeit in einfacher und kostengünstiger Weise ermöglicht.

Die Aufgabe wird für eine erste Mehrschichtfolie zum Hinterspritzen mit einem flüssigen Kunststoff in einem Inmold-Verfahren zur Herstellung eines dekorierten Spritzgussartikels, insbesondere mit gekrümmten Oberflächen, wobei die Mehrschichtfolie mindestens eine Replizierlackschicht aufweist, welche mindestens auf einer ihrer Oberflächen eine, einen visuell wahrnehmbaren und/oder technischen Effekt erzeugende räumliche Struktur aufweist, wobei an mindestens eine Oberfläche mit räumlicher Struktur angrenzend zumindest bereichsweise eine Kontrastschicht angeordnet ist, dadurch gelöst, dass die mindestens eine Replizierlackschicht als eine strahlungsgehärtete Replizierlackschicht ausgebildet ist.

Die Mehrschichtfolie kann im Sinne der Erfindung nicht nur dazu verwendet werden, das Aussehen eines Spritzgussartikels mittels der Mehrschichtfolie optisch zu verändern, also im herkömmlichen Sinne des Begriffs "dekorieren" beispielsweise zu verschönern oder zu verzieren. Die Mehrschichtfolie kann auch eine technische Funktion aufweisen und dadurch beispielsweise technische Eigenschaften des damit dekorierten Spritzgussartikels, wie beispielsweise die Kratzbeständigkeit oder die Fähigkeit zur Schmutzabweisung, verändern, ohne das optische Erschienungsbild des Spritzgussartikels zu beeinflussen.

Eine strahlungsgehärtete Replizierlackschicht als Träger räumlicher Strukturen weist im Vergleich zu den üblicherweise bei Inmold-fähigen Mehrschichtfolien als Träger räumlicher Strukturen eingesetzten thermoplastischen und daher bei Temperatureinwirkung sehr elastischen Lackschichten den Vorteil auf, dass die strahlungsgehärtete Replizierlackschicht mehr duroplastische als thermoplastische Eigenschaften aufweist. Durch die Temperaturbelastung beim Hinterspritzen der Mehrschichtfolie in der Spritzgussform besteht bei herkömmlichen Inmold-fähigen Mehrschichtfolien die Gefahr, dass die thermoplastische Lackschicht erweicht und die darin enthaltene räumliche Struktur bereichsweise verändert oder komplett ausgelöscht wird. Dies führte zu einer verringerten optischen Qualität des dekorierten Spritzgussartikels. Da eine strahlungsgehärtete Replizierlackschicht höheren Temperaturen standhält als thermoplastische Lackschichten, werden die darin abgeformten räumlichen Strukturen beim Hinterspritzen der Mehrschichtfolie nicht verändert oder im Vergleich zu den räumlichen Strukturen in thermoplastischen Lackschichten zumindest deutlich weniger verändert.

Strahlungshärtende Replizierlackschichten werden bekanntermaßen, insbesondere mit Hilfe einer Prägewalze oder eines Prägestempels, in ungehärtetem oder teilgehärtetem Zustand mit einer räumlichen Struktur versehen und anschließend durch Bestrahlung komplett ausgehärtet. Insbesondere hat sich dabei bewährt, wenn die Strahlungshärtung der Replizierlackschicht mittels UV-Strahlung erfolgt. UV-gehärtete Replizierlacke auf der Basis von monomeren oder oligomeren Polyesteracrylaten, Polyetheracrylaten, Urethanacrylaten oder Epoxyacrylaten sowie aminmodifizierten Polyesteracrylaten, aminmodifizierten Polyetheracrylaten oder aminmodifizierten Urethanacrylaten haben sich bewährt.

Als Verfahren zum Aufbringen eines UV-aushärtbaren Replizierlacks wird vorzugsweise ein Tiefdruckverfahren verwendet. Mit einem solchen Verfahren lässt sich die für die Replizierlackschicht benötigte Lackdicke gut erreichen und es ist möglich den Herstellungsprozess als kontinuierlichen Prozess zu betreiben. Alternativ können jedoch auch andere Beschichtungsverfahren eingesetzt werden. Beispielhaft hierfür sind Schlitzdüsenbeschichtung, Siebdruck, Tiefdruck, Flexo, Offset usw. zu nennen.

Für eine strahlungsgehärtete Replizierlackschicht hat sich dabei eine Schichtstärke im Bereich von 0,5 bis 10µm bewährt.

Um eine gute Haftfestigkeit der Kontrastschicht an der strahlungsgehärteten Replizierlackschicht zu gewährleisten, kann eine dünne Haftvermittlerschicht mit einer Schichtdicke im Nanometerbereich zwischen der strahlungsgehärteten Replizierlackschicht und der Kontrastschicht angeordnet sein.

Die räumlichen Strukturen in der strahlungsgehärteten Replizierlackschicht bleiben im Inmold-Verfahren besonders gut erhalten, wenn ein Material für die strahlungsgehärtete Replizierlackschicht so ausgewählt wird, dass es erst bei Temperaturen oberhalb der Spritztemperatur des zum Hinterspritzen eingesetzten Kunststoffs erweicht. Insbesondere ist es bevorzugt, wenn die strahlungsgehärtete Replizierlackschicht erst bei Temperaturen oberhalb der auftretenden Massetemperaturen im Werkzeug erweicht. Da diese vom verwendeten Spritzgussmaterial und der Bauteilgeometrie stark beeinflusst werden und somit insbesondere bei der Hinterspritzung von Folien schwer vorherzusagen sind, hat es sich als vorteilhaft erwiesen, wenn der Erweichungsbereich der strahlungsgehärteten Replizierlackschicht mindestens 20 K oberhalb der Spritztemperatur des verwendeten Spritzgussmaterials liegt.

Weiterhin hat es sich als vorteilhaft erwiesen, wenn die Mehrschichtfolie eine Aufnahmeschicht aufweist, die senkrecht zur Ebene der Mehrschichtfolie gesehen vollflächig ausgebildet ist und auf welcher die strahlungsgehärtete Replizierlackschicht lediglich bereichsweise angeordnet ist. Dies hat sich vor allem dann bewährt, wenn die strahlungsgehärtete Replizierlackschicht eine geringe Schichtdicke im Bereich von 0,5 bis 2 µm aufweist und daher als Oberfläche für den dekorierten Spritzgussartikel keine ausreichende Kratzbeständigkeit aufweist. Bei Schichtdicken der strahlungsgehärteten Replizierlackschicht im Bereich von 2 bis 10 µm kann auf eine schützende Aufnahmeschicht gegebenenfalls verzichtet werden.
Nachdem strahlungsgehärtete Replizierlacke im Vergleich zu thermoplastischen Replizierlacken eine geringere Dehnfähigkeit aufweisen können, kann es während des Inmold-Verfahrens im Bereich starker Krümmungen der Mehrschichtfolie zu Schädigungen wie Überdehnungen oder Rissen in der Folie oder Folienschichten kommen. Der Einsatz der Aufnahmeschicht hat sich auch hier bewährt, da der strahlungsgehärtete Replizierlack mit relativ geringer Dehnfähigkeit auf der Aufnahmeschicht lediglich bereichsweise aufgetragen werden kann und lediglich die Bereiche der Mehrschichtfolie mit dem strahlungsgehärteten Replizierlack versehen werden können, die bei der Dekoration des Spritzgussartikels nicht oder nur wenig gekrümmt werden.

Besonders bevorzugt ist, wenn die strahlungsgehärtete Replizierlackschicht lediglich in Bereichen der Mehrschichtfolie angeordnet ist, die auf dem mit der Mehrschichtfolie dekorierten Spritzgussartikel einen Krümmungsradius von größer als 0,7 mm und eine Dehnung von kleiner als 10% - bezogen auf die Dimensionen der Bereiche der Mehrschichtfolie vor dem Hinterspritzen mit Kunststoff - aufweisen. Dadurch lassen sich strukturelle Schäden in der strahlungsgehärteten Replizierlackschicht im Bereich stark gekrümmter Oberflächen des damit dekorierten Spritzgussartikels wirkungsvoll verhindern.

Besonders bevorzugt ist es, wenn die Mehrschichtfolie die Übertragungslage einer Transferfolie bildet, wobei die Transferfolie eine von der Mehrschichtfolie ablösbare Trägerfolie aufweist und wobei die Mehrschichtfolie mindestens bereichsweise auf einer Seite der Trägerfolie angeordnet ist. Übertragungslagen von Transferfolien sind für sich allein genommen üblicherweise sehr dünn und nicht selbsttragend, da sie durch dünne Schichten gebildet sind.

Die Trägerfolie der Transferfolie schützt die Mehrschichtfolie vor und während des Inmold-Verfahrens vor Beschädigungen und kann nach dem Entformen des dekorierten Gegenstandes aus der Spritzgussform abgezogen werden.

Auf der, der Mehrschichtfolie abgewandten Seite der Trägerfolie oder innerhalb der Mehrschichtfolie kann musterförmig ein Strukturierungslack aufgebracht sein, um die Oberfläche des dekorierten Gegenstandes während des Inmold-Verfahrens fühlbar oder lediglich optisch räumlich zu strukturieren.
Bevorzugt ist hier eine Transferfolie umfassend eine Trägerfolie mit einer ersten Seite und einer zweiten Seite, wobei auf der ersten Seite der Trägerfolie eine Ablöseschicht und auf der, der Trägerfolie abgewandten Seite der Ablöseschicht eine

Übertragungslage angeordnet ist, wobei entweder auf der zweiten Seite der Trägerfolie oder auf der, der zweiten Seite der Trägerfolie gegenüber liegenden Seite der Transferfolie partiell eine Strukturschicht mit einer Schichtdicke von mindestens 9 µm aus einem Strukturierungslack angeordnet ist, dessen Druckfestigkeit mindestens bis zu einer Temperatur von 200 °C im wesentlichen konstant ist.

Der Strukturierungslack weist dabei vorzugsweise
a) einen Duroplasten oder einen Thermoplasten mit einer Glasübergangstemperatur Tg oberhalb von 200°C auf oder wird
b) aus einem mit einem Füllstoff gefüllten Lacksystem gebildet oder
c) ist ein strahlungshärtbarer, ein ESH-härtbarer, ein Epoxy-härtbarer, ein Isocyanat-härtbarer oder säurehärtbarer Lack.

Als Strukturierungslack zur Bildung der Strukturschicht in Tiefdrucktechnik kann beispielsweise folgende, melaminvernetzende Zusammensetzung verwendet werden:

| | |
|---|---|
| 8 Teile | Ethanol |
| 8 Teile | Isopropanol |
| 10 Teile | Toluol |
| 3 Teile | Methylethylketon |
| 26 Teile | Hexamethoxymethylmelamin |
| 30 Teile | Lösung eines hydroxy-funktionalisierten Polymethylmethacrylates (60%) in Xylol |
| 7 Teile | Pigmentruss |
| 2 Teile | hochmolekulares Dispergieradditiv |
| 6 Teile | p-Toluolsulfonsäure |

Alternativ kann als Strukturierungslack zur Bildung der Strukturschicht 9 in Siebdrucktechnik folgende, UV-härtende Zusammensetzung verwendet werden:

| | |
|---|---|
| 25 Teile | Hexandioldiacrylat HDDA |
| 35 Teile | Oligomer eines aliphatischen Urethanacrylates |
| 30 Teile | acryliertes Oligoaminharz |
| 4 Teile | Photoinitiator Typ 1 |
| | (z. B. Irgacure^{®} 1000 der Firma Ciba Geigy) |
| 6 Teile | Pigment Rot 122 |

Außerdem kann folgender, vernetzender Strukturierungslack eingesetzt werden:

| | |
|---|---|
| 10 Teile | Ethanol |
| 8 Teile | Isopropanol |
| 5 Teile | Methylethylketon |
| 8 Teile | Toluol |
| 20 Teile | Hexamethylmethylmelamin |
| 27 Teile | Lösung eines hydroxy-funktionalisierten Polymethylmethacrylates (60%) in Xylol |
| 15 Teile | pyrogene Kieselsäure |
| 7 Teile | p-Toluolsulfonsäure |

Weiterhin kann folgender, nicht vernetzender, mit einem anorganischen Füllmittel hochgefüllter Strukturierungslack eingesetzt werden:

| | |
|---|---|
| 30 Teile | Methylethylketon |
| 10 Teile | Butylacetat |
| 10 Teile | Cyclohexanon |
| 8 Teile | Polymethylmethacrylat (MG 60000 g/mol) |
| 4 Teile | Polyvinylchlorid-Mischpolymerisat mit einem Vinylchlorid-Gehalt von 80 bis 95 % |
| 3 Teile | hochmolekulares Dispergieradditiv |
| 35 Teile | Titandioxid |

Falls erforderlich, können zwischen der Trägerfolie und der Mehrschichtfolie weitere Schichten angeordnet sein wie beispielsweise eine Ablöseschicht, die die Trennung von Trägerfolie und dekoriertem Spritzgussartikel nach der Durchführung des Inmold-Verfahrens erleichtert oder verbessert. Vorzugsweise werden hier durch Strahlungshärtung, Isocyanat-Härtung oder Säurehärtung hochvernetzte Kunststoffschichten als Ablöseschichten eingesetzt.

Die Ablöseschicht kann alternativ aber natürlich auch eine wachsartige Schicht sein.

Eine Ablöseschicht aus einem UV-gehärteten, hochvernetzten Kunststoff kann beispielsweise durch UV-Bestrahlung folgender Zusammensetzung gebildet sein:

| | |
|---|---|
| 25 Teile | Methylethylketon |
| 25 Teile | Ethylacetat |
| 5 Teile | Cyclohexanon |
| 18 Teile | Polymethylmethacrylat (Molekulargewicht MG 60000 g/mol) |
| 25 Teile | Dipentaerithrolpentaacrylat |
| 2 Teile | Photoinitiator Typ I |
| | (z.B. Irgacure® 1000 der Firma Ciba Geigy) |

Alternativ kann die Ablöseschicht säuregehärtet sein und aus folgender Zusammensetzung gebildet werden:

| | |
|---|---|
| 10 Teile | Ethanol |
| 10 Teile | Isopropanol |
| 5 Teile | Methylethylketon |
| 10 Teile | Toluol |
| 25 Teile | Hexamethylmethylmelamin |
| 30 Teile | Lösung eines hydroxy-funktionalisierten Polymethylmethacrylates (60%) in Xylol |
| 10 Teile | p-Toluolsulfonsäure |

Alternativ kann die Ablöseschicht Isocyanat-gehärtet sein und aus folgender Zusammensetzung gebildet werden:

| | |
|---|---|
| 15 Teile | Butylacetat |
| 10 Teile | Cyclohexanon |
| 40 Teile | Lösung eines hydroxy-funktionalisierten Polymethylmethacrylates (60%) in Ethoxypropanol |
| 35 Teile | Desmodur^{®} IL (Diisocyanat, erhältlich über Firma Bayer, Leverkusen) |

Eine lediglich bereichsweise Anordnung der strahlungsgehärteten Replizierlackschicht ist unter Verwendung der Trägerfolie auch ohne eine durchgehend vorhandene Schicht im Aufbau der Mehrschichtfolie möglich.

Bei Ausgestaltung der Mehrschichtfolie als Laminierfolie, die aufgrund ihrer größeren Dicke selbsttragend ist, kann beispielsweise die oben genannte Aufnahmeschicht den geschlossenen Folienkörper bereitstellen. In der Laminierfolie können aber auch nicht direkt mit der strahlungsgehärteten Replizierlackschicht verbundene Schichten die Tragfunktion für die bereichsweise vorhandene strahlungsgehärtete Replizierlackschicht bereitstellen.

Um eine ausgezeichnete Haftung zwischen der Mehrschichtfolie und einem damit zu verbindenden Kunststoff herzustellen, hat es sich als vorteilhaft erwiesen, wenn auf einer ihrer Seiten, vorzugsweise auf der, einer transparenten strahlungsgehärteten Replizierlackschicht abgewandten Seite der Kontrastschicht, eine Kleberschicht angeordnet ist. Es eignen sich hier generell Heißkleber oder durch Druck aktivierbare Kaltkleber, wobei in einem IMD-Verfahren aber üblicherweise Heißkleber zum Einsatz kommen. Zwischen der Kleberschicht und der Kontrastschicht können vorzugsweise weitere Schichten wie Dekorschichten oder Haftvermittlerschichten angeordnet sein.

Wird die Materialauswahl und das Design der Mehrschichtfolie so gewählt, dass sich auf der Fläche der Mehrschichtfolie, die beim Hinterspritzen in Kontakt zum flüssigen Kunststoff kommt, in ausreichender Menge und optimaler Verteilung zumindest Bereiche befinden, die sich auch ohne Kleber gut mit dem flüssigen Kunststoff verbinden lassen, kann auf die Kleberschicht aber auch komplett verzichtet werden.

Es hat sich bewährt, wenn eine transparente strahlungsgehärtete Replizierlackschicht an die Trägerfolie angrenzt, wobei auf der, der Trägerfolie abgewandten Seite der strahlungsgehärteten Replizierlackschicht die räumliche Struktur eingeprägt ist. Ein Betrachter des dekorierten Spritzgussteils kann in dem Fall, dass die transparente strahlungsgehärtete Replizierlackschicht die Oberfläche des dekorierten Spritzgussartikels bildet und die räumliche Struktur auf der dem Betrachter abgewandten Rückseite der strahlungsgehärteten Replizierlackschicht angeordnet ist, diese durch die transparente strahlungsgehärtete Replizierlackschicht hindurch erkennen.

Die strahlungsgehärtete Replizierlackschicht kann aber auch opak ausgebildet sein, wobei die räumliche Struktur in diesem Fall dem Betrachter zugewendet angeordnet sein muss. Gegebenenfalls ist die räumliche Struktur auf dem dekorierten Spritzgussartikel dann durch eine transparente Schutz- oder Lackschicht oder eine schützende weitere transparente Überspritzung in einem Inmold-Verfahren (siehe oben) abzudecken, um sie vor Beschädigung zu schützen.

Eine zwischen der Trägerfolie der Transferfolie und der strahlungsgehärteten Replizierlackschicht angeordnete Aufnahmeschicht im Schichtverbund der Mehrschichtfolie kann die Schutzfunktion für die räumliche Struktur bereitstellen, falls diese transparent ausgebildet ist.

Die Kontrastschicht ist vorzugsweise als Reflexionsschicht ausgebildet, die aus einem metallischen und/oder nicht-metallisch anorganischen reflektiven Material gebildet ist. Als metallische Reflexionsschichten haben sich hier unter anderem solche mit mindestens einem Metall der Gruppe Aluminium, Gold, Silber, Platin, Kupfer, Nickel, Chrom, Zinn, Indium oder deren Legierungen bewährt, die üblicherweise aufgedampft, aufgesputtert oder über galvanische Bäder erzeugt werden. Als Materialien für anorganisch-nichtmetallische Reflexionsschichten eignen sich beispielsweise TiO₂, ZnS, MgF₂ oder SiO, die üblicherweise aufgedampft oder aufgesputtert werden. Auch Kombinationen von metallischen mit nicht-metallisch anorganischen Schichten unter Bildung einer mehrschichtigen Reflexionsschicht haben sich bewährt.

Besonders interessante Effekte ergeben sich, wenn die Kontrastschicht erste Bereiche und in der Ebene der Mehrschichtfolie gesehen daneben angeordnet oder teilweise überlappend zu den ersten Bereichen angeordnet mindestens zweite Bereiche aufweist, wobei die Kontrastschicht in den ersten Bereichen und in mindestens den zweiten Bereichen unterschiedlich, insbesondere im Hinblick auf Transparenz und Farbeindruck, ausgestaltet ist.

Es hat sich bewährt, wenn die räumliche Struktur zumindest bereichsweise als eine makroskopische Struktur ausgebildet ist, wobei die makroskopische Struktur eine Ausdehnung in der Ebene der strahlungsgehärteten Replizierlackschicht von mindestens 0,03 mm und eine Ausdehnung senkrecht zur Ebene der strahlungsgehärteten Replizierlackschicht in einem Bereich von 0,01 bis 0,1 mm aufweist.

Es hat sich ebenso bewährt, wenn die räumliche Struktur zumindest bereichsweise als diffraktive Struktur ausgebildet ist. Besonders bevorzugt ist es dabei, wenn die räumliche Struktur zumindest bereichsweise als eine Mattstruktur, insbesondere eine asymmetrische Mattstruktur ausgebildet ist. Mattstrukturen besitzen im mikroskopischen Maßstab feine Reliefstrukturelemente, die das Streuvermögen bestimmen und nur mit statistischen Kenngrößen beschrieben werden können, wie z.B. Mittenrauhwert Rₐ, Korrelationslänge I_{c} usw., wobei die Werte für den Mittenrauhwert Rₐ im Bereich 20 nm bis 5000 nm liegen mit Vorzugswerten von 50 nm bis 1000 nm, während die Korrelationslänge I_{c} in wenigstens einer Richtung Werte im Bereich von 200 nm bis 50'000 nm, vorzugsweise zwischen 500 nm bis 10'000 nm, aufweisen. Siehe hierzu beispielsweise die DE 102 16 561 A1, die unter anderem Mattstrukturen beschreibt. Die mikroskopisch feinen Reliefstrukturelemente einer isotropen Mattstruktur weisen keine azimutale Vorzugsrichtung auf, weshalb das gestreute Licht mit einer Intensität grösser als ein vorbestimmter Grenzwert, z.B. durch die visuelle Erkennbarkeit vorgegeben, in einem durch das Streuvermögen der Mattstruktur vorbestimmten Raumwinkel in allen azimutalen Richtungen gleichmässig verteilt ist und das Flächenelement im Tageslicht weiß bis grau erscheint. Bei einer Veränderung des Kippwinkels weg von der Vertikalen erscheint das Flächenelement dunkel. Stark streuende Mattstrukturen verteilen das gestreute Licht in einen größeren Raumwinkel als schwach streuende Mattstrukturen. Falls die Reliefelemente der Mattstruktur eine Vorzugsrichtung haben, so weist das gestreute Licht eine anisotrope Verteilung auf.

Mattstrukturen werden bevorzugt in Bereichen des dekorierten Spritzgussartikels angeordnet, die stärker gekrümmt sind, nachdem die Erkennbarkeit der Mattstruktur durch eine derartige Anordnung nicht oder kaum beeinflusst wird.

Weiterhin hat es sich bewährt, wenn die diffraktive Struktur ein Hologramm oder ein Kinegram^{®} bildet und lediglich in Bereichen der Mehrschichtfolie angeordnet ist, die auf dem mit der Mehrschichtfolie dekorierten Gegenstand eine Dehnung von < 10% aufweisen. In stark gekrümmten Bereichen des dekorierten Spritzgussartikels und somit in Bereichen mit stärker Dehnung der Mehrschichtfolie ist die optische Erkennbarkeit des Hologramms oder Kinegrams^{®} unter Umständen beeinträchtigt.

Weiterhin ergeben sich optisch interessante Effekte, wenn die Mehrschichtfolie als räumliche Struktur Linsenelemente oder Freiformflächen, insbesondere diffraktive Linsen oder diffraktive Freiformflächen, aufweist.

Vorzugsweise weist die Mehrschichtfolie eine mittels Laser eingebrachte Markierung, insbesondere in Form von alphanumerischen Zeichen, geometrischen Mustern oder bildlichen Darstellungen, auf. Auch eine bereichsweise Auslöschung von räumlichen Strukturen kann mittels Laser erfolgen. Nachdem eine Lasermarkierung auch noch nach der Fertigstellung der Mehrschichtfolie in deren Schichtverbund eingebracht werden kann, ist die Mehrschichtfolie beispielsweise im Hinblick auf ein Herstellerkennzeichen oder sonstige Angaben in einfacher Weise individualisierbar.

Im Hinblick auf die optisch ansprechende Gestaltung der Mehrschichtfolie hat es sich als besonders günstig erwiesen, wenn die Mehrschichtfolie mindestens einen farbigen Dekordruck, beispielsweise eine bereichsweise Anordnung von Farblack, aufweist. Die Anordnung des Dekordrucks im Mehrschichtfolienverbund kann weitgehend beliebig erfolgen und richtet sich danach, ob eine transparente oder opake strahlungsgehärtete Replizierlackschicht verwendet wird beziehungsweise von welcher Seite der Betrachter die Mehrschichtfolie am dekorierten Spritzgussartikel betrachtet. Da sowohl transparente als auch opake Kunststoffe für das Hinterspritzen der Mehrschichtfolie eingesetzt werden können, sind hier diverse Möglichkeiten für die Ausgestaltung der Mehrschichtfolie gegeben. So kann der Dekordruck direkt auf der strahlungsgehärteten Replizierlackschicht oder der Kontrastschicht gebildet sein. Wird die Kontrastschicht beispielsweise durch eine transparente strahlungsgehärtete Replizierlackschicht hindurch betrachtet und ist der Dekordruck vom Betrachter aus hinter der Kontrastschicht angeordnet, so muss die Kontrastschicht zumindest bereichsweise transparent oder semitransparent sein, um den Dekordruck erkennen zu können. Semitransparenz einer Kontrastschicht, die als metallische Reflexionsschicht ausgebildet ist, ist beispielsweise durch ein Aufbringen eines metallischen Punktrasters oder ähnlichem erreichbar. Transparente Reflexionsschichten sind bei Verwendung von Metallen bekanntermaßen auch über eine entsprechend geringe Schichtdicke zu erzielen, während nichtmetallisch-anorganische Materialien auch bei Verwendung von im Vergleich höheren Schichtdicken zumindest noch teilweise transparent sind.

Weiterhin hat es sich als günstig erwiesen, wenn die Mehrschichtfolie mindestens einen farblich mit der strahlungsgehärteten Replizierlackschicht übereinstimmenden Dekordruck aufweist, wobei der Dekordruck auf der strahlungsgehärteten Replizierlackschicht angeordnet ist und bereichsweise die räumliche Struktur in der strahlungsgehärteten Replizierlackschicht optisch auslöscht. Es wird hier auf die DE 102 36 810 A1 verwiesen, die eine derartige Vorgehensweise beschreibt.

Besonders ausdrucksstarke Mehrschichtfolien werden erzielt, wenn die Dekorschicht ein geometrisches oder bildliches Muster ausbildet. Dabei kann der Dekordruck ein durch die räumliche Struktur bereits vorgegebenes Muster oder Teilmuster bereichsweise farblich gestalten oder ergänzen. Um den erwünschten optischen Eindruck zu erzielen, ist dabei ein registergenaues Ausrichten von räumlicher Struktur zu Dekordruck erforderlich.

Weiterhin kann die Mehrschichtfolie Dünnfilme aufweisen, die einen blickwinkelabhängigen Farbwechseleffekt basierend auf Interferenzerscheinungen generieren. Hier sind Kombinationen aus stofflich unterschiedlichen Dünnfilmen als Dünnfilmstapel oder die Verwendung von Flüssigkristallpolymerschichten hinlänglich bekannt. Auch der Einsatz von an sich bekannten optisch variablen Tinten (OVI = Optically Variable Ink) ist möglich.

Im Hinblick auf die optische Qualität und Gebrauchstüchtigkeit des mit der Mehrschichtfolie dekorierten Gegenstandes ist es vorteilhaft, wenn die Mehrschichtfolie eine schmutzabweisende Schicht und/oder eine kratzfeste Schicht aufweist, die die Oberfläche des dekorierten Spritzgussartikels bildet. Dabei können schmutzabweisende Schichten, deren Oberflächen mikrostrukturiert sind und einen Lotos-Effekt aufweisen, Verwendung finden.

Eine zweite Mehrschichtfolie zum Hinterspritzen mit einem flüssigen Kunststoff in einem Inmold-Verfahren zur Herstellung eines dekorierten Spritzgussartikels mit gekrümmten Oberflächen weist, kombiniert mit Merkmalen der oben beschriebenen ersten Mehrschichtfolie, mindestens eine Replizierlackschicht auf, welche mindestens auf einer ihrer Oberflächen eine, einen visuell wahrnehmbaren und/oder technischen Effekt erzeugende räumliche Struktur aufweist, wobei an mindestens eine Oberfläche mit räumlicher Struktur angrenzend zumindest bereichsweise eine Kontrastschicht angeordnet ist, indem die räumliche Struktur in der Mehrschichtfolie zumindest bereichsweise derart verzerrt ausgebildet ist, dass die räumliche Struktur nach der Herstellung des mit der Mehrschichtfolie dekorierten Spritzgussartikels auf den gekrümmten Oberflächen optisch verzerrungsfrei wahrnehmbar ist. Die räumlichen Struktur wird dabei je nachdem, ob die Mehrschichtfolie auf eine konvexe oder konkave Oberfläche aufgebracht wird und daraus resultierend die räumliche Struktur entsprechend durch Dehnung oder Stauchung deformiert wird, invers verzerrt in die Mehrschichtfolie eingebracht. In Bereichen, in welchen die räumliche Struktur während des Inmold-Verfahrens gedehnt wird, wird in der Mehrschichtfolie eine gestauchte räumliche Struktur ausgebildet und umgekehrt.

Die beim Inmold-Verfahren auf die Mehrschichtfolie einwirkenden Kräfte dehnen die Folie und führen zu einer Deformation der räumlichen Struktur, die desto stärker auftritt, je mehr die Mehrschichtfolie gekrümmt wird. Es ergibt sich ein störender optischer Eindruck, der durch die zweite Mehrschichtfolie wirkungsvoll vermieden wird. Die durch die Krümmung der Mehrschichtfolie beim Hinterspritzen erzeugte Deformation in der räumlichen Struktur kann jedoch bestimmt und mit der gewünschten räumlichen Struktur so überlagert werden, dass in der Mehrschichtfolie vor dem Hinterspritzen ein Zerrbitd der räumlichen Struktur vorliegt, sich dem Betrachter nach dem Hinterspritzen der Mehrschichtfolie auch in Bereichen mit Krümmungen ein zerrfreies oder nahezu zerrfreies Bild der räumlichen Struktur zeigt. Die Bestimmung der erforderlichen Vorkompensation in der räumlichen Struktur muss für jede Bauteilform gesondert erfolgen.

Dazu wird beispielsweise in einer ersten Methode ein experimenteller Test mit einer Mehrschichtfolie mit einem regelmäßigen diffraktiven Gitterraster als räumliche Struktur durchgeführt. Die Mehrschichtfolie wird mit Kunststoff hinterspritzt und die dann deformiert auf dem Bauteil vorliegenden Gitterkonstanten des Gitterrasters ausgemessen. Nach Charakterisierung und Quantifizierung der entstandenen Verformungen des Gitterrasters, gegebenenfalls zusätzlich der Beugungseffizienzen, werden die Ergebnisse invertiert und entsprechend auf das regelmäßige diffraktive Gitterraster übertragen, so dass ein verzerrtes, gestauchtes Gitterrasters in der Mehrschichtfolie vorliegt. Wird die so präparierte Mehrschichtfolie nun hinterspritzt, treten die vorberechneten Verformungen auf und das entsprechend vorkompensierte, gestauchte Gitterraster wird so gedehnt, dass ein regelmäßiges diffraktives Gitterraster entsteht.

In einer zweiten Methode wird das beim Spritzgussvorgang resultierende Bauteil in senkrechter Projektion betrachtet und vermessen. Die am Bauteil vorliegenden Krümmungen entsprechen einer lokalen Steigung (Gradienten), welcher in der senkrechten Projektion einem bestimmten Punkt der Mehrschichtfolie zugeordnet wird. Bei der Berechnung der notwendigen Verzerrung der räumlichen Struktur wird der an einem Punkt der Mehrschichtfolie später vorliegende Gradient invertiert berücksichtigt.

In einer dritten Methode wird die lokale Krümmung der Mehrschichtfolie am dekorierten Spritzgussartikel berechnet oder abgeschätzt. Aus der lokalen Krümmung wird ein Korrekturfaktor berechnet, der zur Auslegung des Zerrbildes verwendet wird. Dabei erfolgt die Vorkompensation proportional und gegebenenfalls sogar überproportional zur später vorliegenden Krümmung.

In einer vierten Methode wird ein Analogieschlussverfahren angewendet, bei welchem beispielsweise Metall verformt wird und angenommen, dass die dabei auftretenden Verzerrungen sich in gleicher Weise bei der Mehrschichtfolie ergeben werden. Das für das Metall erzielte Ergebnis wird auf die erforderliche Verzerrung der räumlichen Struktur in der Mehrschichtfolie übertragen.

Den Methoden ist allerdings gemeinsam, dass die Bereiche der Mehrschichtfolie, die bei der Herstellung des mit der Mehrschichtfolie dekorierten Spritzgussartikels eine hohe Deformation erfahren, eine Verzerrung aufweisen beziehungsweise eine stärkere Verzerrung aufweisen als die Bereiche der Mehrschichtfolie, die bei der Herstellung des mit der Mehrschichtfolie dekorierten Spritzgussartikels keine oder eine niedrigere Deformation erfahren. Das Ausmaß der Vorkompensation der Deformation der räumlichen Struktur hängt von der Krümmung dieses Bereiches der Mehrschichtfolie bei der Herstellung des mit der Mehrschichtfolie dekorierten Spritzgussartikels ab und ist dazu proportional. In Bereichen mit hoher Krümmung wird die räumliche Struktur in der Mehrschichtfolie stark deformiert, so dass dort eine stärkere Veränderung der räumlichen Struktur vorgenommen werden muss als in Bereichen mit geringer Krümmung.

Die Verzerrung der räumlichen Struktur in der Mehrschichtfolie kann, in einem durch eine x-Achse, eine y-Achse und eine z-Achse aufgespannten dreidimensionalen Raum, in Richtung der x-Achse und/oder in Richtung der y-Achse und/oder in Richtung der z-Achse vorliegen.

Als mögliche Berechnungsverfahren für die Berechnung der Verformung und der daraus resultierenden Vorkompensation kommt beispielsweise folgendes in Frage:
- Finite-Elemente-Methoden zur Lösung der partiellen Differentialgleichungen, die die Verformung von Bauteilen unter Einwirkung von mechanischen Kräften beschreiben,
- Projektionsmethode, bei der der lokale Flächenvergrößerungsfaktor bestimmt wird, der mit dem Kosinus des lokalen Steigungswinkels skaliert wird oder
- Berechnung der lokalen Krümmungen ausgehend vom mechanischen Design (beispielsweise CAD-Daten).

Dabei können verschiedene der oben genannten Methoden zur Bestimmung der notwendigen Verzerrung miteinander kombiniert werden. So kann beispielsweise in einer ersten Stufe die zweite der oben genannten Methoden (Betrachtung in senkrechter Projektion) durchgeführt und anhand der Ergebnisse eine Musterfolie erstellt und gemäß der ersten Methode experimentell getestet werden. Die Ergebnisse aus dem Test können zeigen, ob noch kleinere Korrekturen erforderlich sind und diese gegebenenfalls in der Mehrschichtfolie zusätzlich berücksichtigt werden. Das sich ergebende optische Ergebnis wird durch eine Kombination der Methoden demnach noch verbessert.

Die Verzerrung der räumlichen Struktur erfolgt vorzugsweise durch eine mindestens partielle Änderung
- der Gitterperiode zur Änderung des lokalen Beugungswinkels und/oder
- der Strukturtiefe zur Steuerung der Beugungseffizienz und/oder
- der Profilform zur Anpassung oder Korrektur der Winkelverteilung des reflektierten Lichts und/oder
- der Azimutorientierung zur Anpassung/Korrektur der Winkelverteilung des reflektierten Lichts..

Die zweite erfindungsgemäße Mehrschichtfolie weist vorzugsweise neben der räumlichen Struktur weitere optisch sichtbare Markierungen auf, insbesondere eine Lasermarkierung, eine reflektive Markierung oder ein Druckbild, welche zumindest bereichsweise derart verzerrt ausgebildet sind, dass die weiteren räumlichen Markierungen nach der Herstellung der mit der Mehrschichtfolie dekorierten Spritzgussartikels mittels des Inmold-Verfahrens auf den gekrümmten Oberflächen optisch verzerrungsfrei wahrnehmbar sind. Die für die Mehrschichtfolie notwendigen Verzerrungen werden analog zu den obigen Methoden bestimmt und auf die Ausbildung der weiteren optisch sichtbaren Markierungen übertragen, indem die Dicke und/oder Flächenausdehnung der weiteren optisch sichtbaren Markierung entsprechend vorkompensiert wird.

Eine dritte Mehrschichtfolie zum Hinterspritzen mit einem flüssigen Kunststoff in einem Inmold-Verfahren zur Herstellung von dekorierten Spritzgussartikeln weist, kombiniert mit Merkmalen der oben beschriebenen ersten und/oder zweiten Mehrschichtfolie, mindestens eine Reptiziertackschicht auf, welche mindestens auf einer ihrer Oberflächen eine, einen visuell wahrnehmbaren und/oder technischen Effekt erzeugende räumliche Struktur aufweist, wobei an mindestens eine Oberfläche mit räumlicher Struktur angrenzend lediglich bereichsweise eine Kontrastschicht angeordnet ist, indem die Mehrschichtfolie in Bereichen ohne Kontrastschicht zumindest bereichsweise mindestens eine Funktionsschicht, die auch der Replizierlackschicht entsprechen kann, aufweist, wobei die mindestens eine Funktionsschicht reflektierende und/oder transmittierende Strukturen aufweist, welche als lichtbeugende, lichtbrechende, lichtstreuende, lichtpolarisierende oder lichtabsorbierende Mikro- oder Nanostrukturen ausgebildet sind.

Solche Funktionsschichten weisen eine technische Funktion auf und können in dekorativ eingesetzte Mehrschichtfolien integriert werden.

Dabei hat es sich bewährt, wenn die Funktionsschicht
a) mindestens ein Diffusorelement zur Erzeugung einer gleichmäßigen oder angepassten Lichtverteilung über die Fläche des mit der Mehrschichtfolie dekorierten Spritzgussartikels, und/oder
b) mindestens eine Vergrößerungslinse mit diffraktiver oder refraktiver Linsenoptik aufweist und/oder
c) mindestens eine Entspiegelungsschicht oder eine Mottenaugenstruktur zur Verminderung von Reflexionen oder Verbesserung der Transmission und/oder
d) mindestens eine Polarisationsfilterschicht und/oder
e) mindestens eine Filterschicht zur Filterung bestimmter Wellenlängen des sichtbaren Lichts
umfasst.

Weiterhin hat es sich bewährt, wenn die Mikro- oder Nanostrukturen aus der Gruppe umfassend Mattstrukturen, Fresnellinsen, Mikroprismen, Freiformflächen (diffraktiv) oder Gitterstrukturen, insbesondere Lineargitterstrukturen, Kreuzgitterstrukturen, Hexagonalgitterstrukturen, Kreisgitterstrukturen, Blazegitterstrukturen oder Kombinationen dieser Gitterstrukturen, gewählt sind.

Auch schmutzabweisende Schichten mit Lotos-Effekt, also mit einer Oberfläche, die im mikroskopischen Bereich wie die Blätter einer Lotos-Blüte regelmäßige Mikroerhebungen aufweist, haben sich als Funktionsschicht bewährt.

Ein dekorierter Spritzgussartikel mit einem spritzgegossenen Kunststoffkörper, dessen Oberfläche zumindest bereichsweise in einem Inmold-Verfahren mit einer erfindungsgemäßen Mehrschichtfolie bedeckt und verbunden ist, weist ideale optische Eigenschaften und weiterhin eine verbesserte Gebrauchstüchtigkeit auf.

Es hat sich als vorteilhaft erwiesen, wenn die Kunststoffspritzmasse zum Hinterspritzen der Mehrschichtfolie aus ABS, einer ABS/PC-Mischung, PC, PA, SAN, ASA, TPO, PMMA, PP oder einer Mischung aus mindestens zwei dieser Materialien, sofern diese miteinander kompatibel sind, gebildet ist. Derartige Kunststoffmaterialien lassen sich zuverlässig auf Spritzgussmaschinen verarbeiten.

Besonders vorteilhaft ist es, wenn der dekorierte Spritzgussartikel ein opakes oder zumindest teilweise transparentes Gehäusebauteil eines elektronischen Geräts, insbesondere eines Telefons oder Mobiltelefons, bildet.
Funktionsschichten der Mehrschichtfolie werden vorzugsweise in Bereichen des zumindest teilweise transparenten Gehäusebauteils, insbesondere im Bereich des Displayfensters des Telefons oder Mobiltelefons, angeordnet. So können dort beispielsweise Vergrößerungslinsen, Entspiegelungsschichten oder auch Diffusorelemente zur besseren Lesbarkeit von Anzeigen angeordnet sein.

Bevorzugt befinden sich im Bereich des transparenten Displayfensters oberhalb den Anzeigen lediglich Funktionsschichten. Der Randbereich des Displayfensters ist dabei mindestens mittels der räumlichen Struktur dekorativ gestaltet, wobei das Displayfenster allseitig einen optisch ansprechenden Randbereich erhält.

Weiterhin hat es sich bewährt, wenn der dekorierte Spritzgussartikel ein Verkleidungsbauteil für den Innen- oder Außenbereich eines Automobils bildet. So wird der erfindungsgemäße dekorierte Spritzgussartikel vorzugsweise im Bereich des Armaturenbretts angeordnet.

Die Aufgabe wird für das Verfahren dadurch gelöst, dass die Mehrschichtfolie zur Bildung einer mechanisch verstärkten Mehrschichtfolie auf eine ebene, thermoplastische Kunststoffplatte geprägt wird, die mechanisch verstärkte Mehrschichtfolie zu einer Schale thermogeformt wird und die Schale in einem Inmold-Verfahren mit einem Kunststoff hinterspritzt wird.

Die Dicke der Kunststoffplatte beträgt dabei vorzugsweise etwa 125 µm bis 5 mm. Bei einer solchen "Kunststoffplatte" handelt es sich gegebenenfalls lediglich um eine selbsttragende Folie, vorzugsweise mit einer Dicke im Bereich von etwa 125 µm bis 250 µm. Dabei ist es günstig, wenn nach dem Aufkaschieren der Mehrschichtfolie auf die selbsttragende Folie oder Kunststoffplatte ein formstabiles Halbzeug vorliegt. Bei Verwendung von Kunststoffplatten mit Dicken im mm-Bereich kann aufgrund der hohen Formstabilität des gebildeten Bauteils gegebenenfalls auf eine nachfolgende Hinterspritzung verzichtet werden.

Besonders bevorzugt eingesetzt wird das erfindungsgemäße Verfahren für dekorierte Spritzgussartikel, deren mechanisch verstärkte Mehrschichtfolie beim Thermoformen lediglich in Teilbereichen deformiert wurde.

Beim Aufprägen und Verstärken der Mehrschichtfolie mittels der Kunststoffplatte erfolgt im wesentlichen noch keine Deformation der Mehrschichtfolie, so dass die darin enthaltenen räumlichen Strukturen unverändert oder weitgehend unverändert erhalten bleiben. Anschließend wird die verstärkte Mehrschichtfolie zu einer Schale geformt, wobei in den eben verbleibenden Bereichen keine Deformation der räumlichen Struktur erfolgt, da sich die Mehrschichtfolie in diesen Bereichen aufgrund der Verstärkung nicht oder nur unwesentlich dehnt. Die Kunststoffplatte bewirkt, dass die bei der Verformung auftretenden Spannungen im Krümmungsbereich der verstärkten Mehrschichtfolie sich lateral, also in der Ebene der Mehrschichtfolie, nicht mehr oder nur noch eingeschränkt verteilen können. Dadurch werden die Schichten der Mehrschichtfolie im Bereich der erzeugten Krümmungen stärker deformiert, jedoch in eben verbleibenden Bereich entsprechend geringer deformiert, so dass dort ein optisch einwandfreies Bild der räumlichen Struktur verbleibt.

Die gebildete Schale wird nun entweder hinterspritzt, indem die auf die Kunststoffplatte geprägte Mehrschichtfolie zum eingespritzten Kunststoff weist. Alternativ wird die gebildete Schale hinterspritzt, indem die verformte thermoplastische Kunststoffplatte zum eingespritzten Kunststoff weist. Auch hier hängt es von der Transparenz oder Opazität der Mehrschichtfolie und der Kunststoffplatte ab, ob ein transparenter oder opaker Kunststoff zum Hinterspritzen eingesetzt werden sollte und welche Seite der Schale mit dem Spritzgussmaterial verbunden werden sollte.

Die Figuren 1 bis 12 sollen die erfindungsgemäßen Mehrschichtfolien beispielhaft erläutern. So zeigen
- Figuren 1 bis 4: verschiedene Mehrschichtfolien mit strahlungsgehärteten Replizierlackschichten,
- Figur 5: ein regelmäßiges diffraktives X-Y-Gitterraster,
- Figur 6: das X-Y-Gitterraster aus Figur 5 nach einer Deformation,
- Figuren 7 und 8: schematisch die Erfassung von lokalen Steigungsgradienten an gekrümmten Oberflächen in senkrechter Projektion,
- Figur 9: schematisch eine Vorrichtung zum Verformen einer mechanisch verstärkten Mehrschichtfolie,
- Figur 10: schematisch die mittels des Vorrichtung gebildete Schale im Querschnitt,
- Figur 11: die auf Seiten der Kunststoffplatte mit Kunststoff hinterspritzte Schale aus Figur 10 und
- Figur 12: die auf der, der Kunststoffplatte gegenüber liegenden Seite der Schale mit Kunststoff hinterspritzte Schale aus Figur 10.

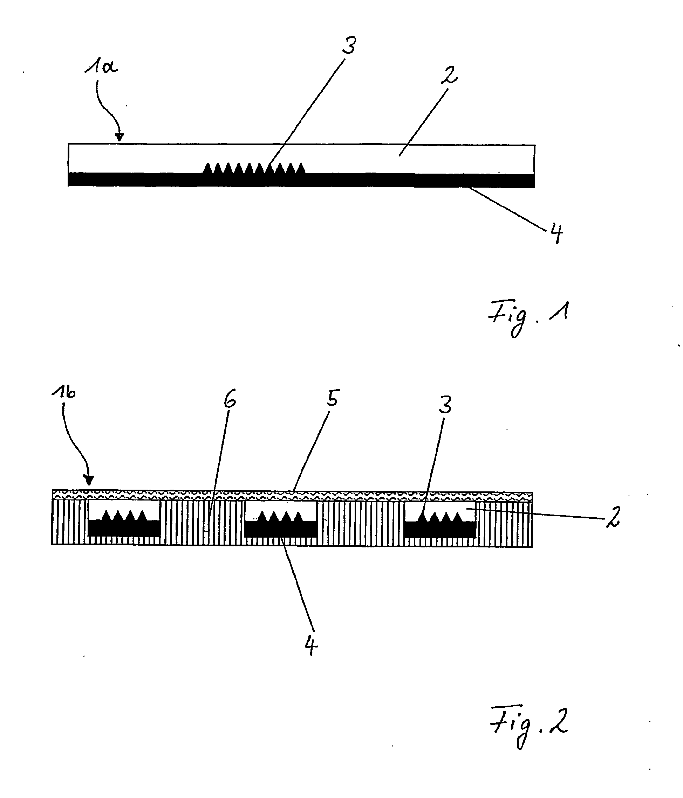

So zeigt Figur 1 eine Inmold-fähige Mehrschichtfolie 1 a mit einer strahlungsgehärteten Replizierlackschicht 2 aus aminmodifiziertem Polyesteracrylat, einer in die strahlungsgehärtete Replizierlackschicht 2 eingeprägten räumlichen Struktur 3 und einer Kontrastschicht, die als semitransparente Reflexionsschicht 4 aus Aluminium ausgebildet ist, die die strahlungsgehärtete Replizierlackschicht 2 auf ihrer die räumliche Struktur 3 aufweisenden Seite bedeckt. Die Reflexionsschicht 4 ist, hier nicht sichtbar, als Punktraster ausgeführt und bedeckt die strahlungsgehärtete Replizierlackschicht 2 nicht vollständig. Die Mehrschichtfolie 1 a ist selbsttragend als Laminierfolie ausgebildet und kann weitere Schichten wie beispielsweise eine Kleberschicht aufweisen. Die Mehrschichtfolie 1a wird vorzugsweise auf nicht oder mäßig gekrümmten Oberflächen von Spritzgussartikeln eingesetzt.

Figur 2 zeigt eine weitere Mehrschichtfolie 1 b mit einer Aufnahmeschicht 5 aus Klarlack, welche lediglich bereichsweise mit der strahlungsgehärteten Replizierlackschicht 2 beschichtet ist. Auf der, der Aufnahmeschicht 5 abgewandten Seite der strahlungsgehärteten Replizierlackschicht 2 ist eine als Reflexionsschicht 4 ausgebildete Kontrastschicht und eine mittels eines Prägestempels eingeprägte räumliche Struktur 3 erkennbar. Eine Kleberschicht 6 aus einem heißsiegelfähigen Klebstoff bedeckt die Reflexionsschicht 4 sowie die davon freien Bereiche der Aufnahmeschicht 5. Die Mehrschichtfolie 1 b ist ebenfalls selbsttragend als Laminierfolie ausgebildet und kann weitere Schichten, wie beispielsweise Haftvermittlerschichten, aufweisen.

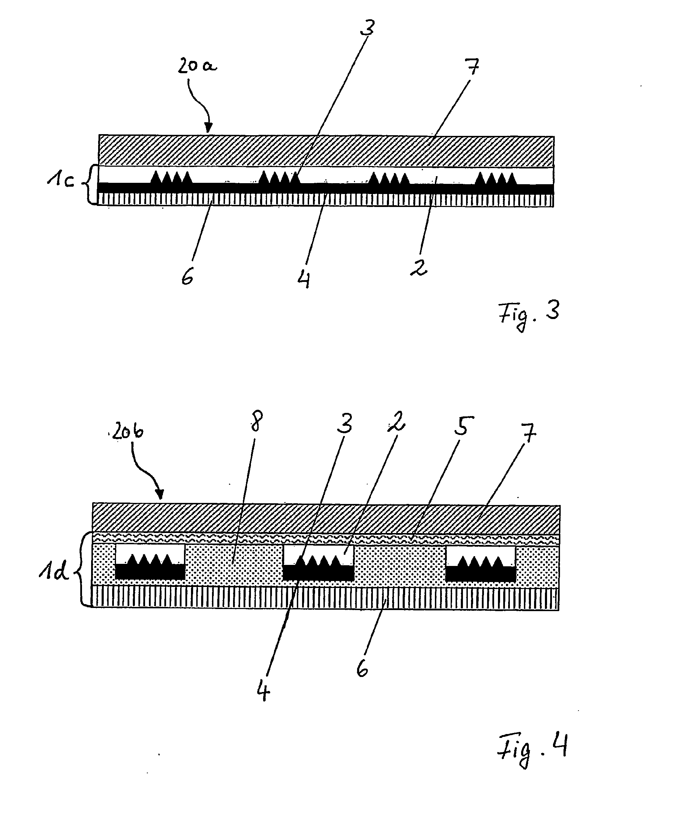

Figur 3 zeigt eine Transferfolie 20a, welche eine Trägerfolie 7 und eine Mehrschichtfolie 1 c als Übertragungslage aufweist. Die Trägerfolie 7 kann nach dem Inmold-Verfahren von der Mehrschichtfolie 1c abgelöst werden. Die Mehrschichtfolie 1c weist eine transparente, farbige strahlungsgehärtete Replizierlackschicht 2 mit einer räumlichen Struktur 3 und eine als Reflexionsschicht 4 aus aufgedampftem Aluminium ausgebildete Kontrastschicht auf. Eine Kleberschicht 6 aus einem heißsiegelfähigen Klebstoff bedeckt die Reflexionsschicht 4.

Figur 4 zeigt eine weitere Transferfolie 20b, welche eine Trägerfolie 7 und eine Mehrschichtfolie 1 d als Übertragungslage aufweist. Die Trägerfolie 7 kann nach dem Inmold-Verfahren von der Mehrschichtfolie 1d abgelöst werden. Die Mehrschichtfolie 1d weist eine Aufnahmeschicht 5 aus Klarlack auf, auf welcher musterförmig eine transparente, farbige strahlungsgehärtete Replizierlackschicht 2 mit einer räumlichen Struktur 3 und eine als Reflexionsschicht 4 aus aufgedampftem Aluminium ausgebildete Kontrastschicht aufgebracht ist. Ein Dekordruck 6 aus opakem, farbigem Lack ist auf die Reflexionsschicht 4 und die freien Bereiche der Aufnahmeschicht 5 gedruckt. Eine Kleberschicht 6 aus einem heißsiegelfähigen Klebstoff bedeckt den Dekordruck 8.

Die Transferfolien 20a, 20b aus den Figuren 3 und 4 werden beispielsweise so verwendet, dass diese in eine Spritzgussform eingelegt und hinterspritzt werden, wobei die Trägerfolie 7 an die Innenwandung der Spritzgussform angelegt wird. Die flüssige, in die Spritzgussform gedrückte Kunststoffspritzmasse drückt die Transferfolie an die Innenwandung und füllt die Spritzgussform, wobei sich die Kunststoffspritzmasse mit der Kleberschicht verbindet. Nach dem Abkühlen der Kunststoffspritzmasse und der Ausbildung eines festen, mit der Mehrschichtfolie dekorierten Spritzgusskörpers wird die Spritzgussform geöffnet und die Trägerfolie abgezogen.

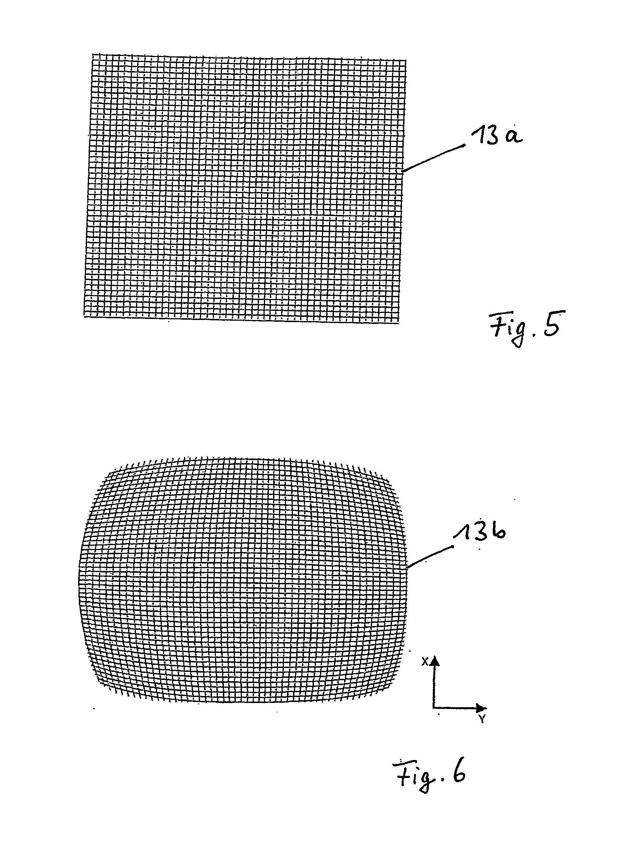

Figur 5 zeigt schematisch ein regelmäßiges diffraktives X-Y-Gitterraster 13a, während Figur 6 ein verzerrtes X-Y-Gitterraster 13b resultierend aus dem Gitterraster 13a aus Figur 5 nach einer Deformation durch Hinterspritzen in einem Inmold-Verfahren zeigt. Ein derartiges X-Y-Gitterraster 13a, 13b kann hervorragend vermessen und die Verzerrung aufgrund der Verformung an jeder Stelle des Gitterrasters ermittelt werden. Nach Charakterisierung und Quantifizierung der entstandenen Verformung des Gitterrasters werden die Ergebnisse invertiert und entsprechend auf das regelmäßige diffraktive Gitterraster übertragen, so dass ein verzerrtes Gitterrasters als räumlicher Struktur in eine Mehrschichtfolie eingebracht wird. Wird die so präparierte Mehrschichtfolie nun hinterspritzt, treten die vorberechneten Verformungen auf und das entsprechend vorkompensierte, verzerrte Gitterraster wird so gedehnt, dass ein regelmäßiges diffraktives Gitterraster entsteht.

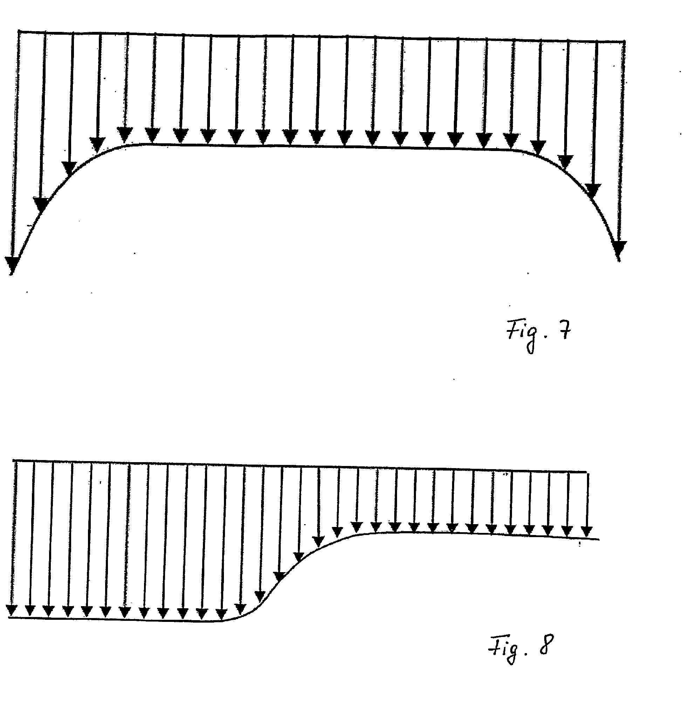

Figuren 7 und 8 zeigen schematisch die Erfassung von lokalen Steigungen (Gradienten) an gekrümmten Oberflächen in senkrechter Projektion.

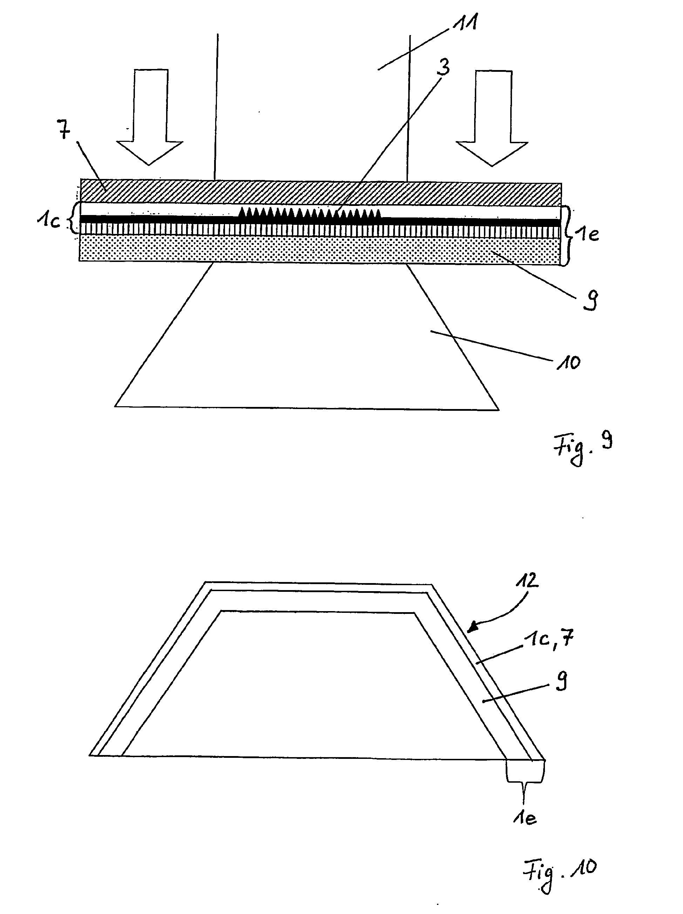

Figur 9 zeigt schematisch eine Vorrichtung zum Verformen einer mechanisch verstärkten Mehrschichtfolie 1e. Dabei wird eine Transferfolie gemäß Figur 3 auf eine ebene Kunststoffplatte 9 geprägt und somit mechanisch verstärkt. Die verstärkte Mehrschichtfolie 1 e inklusive der Trägerfolie 7 wird über einer Form 10 angeordnet und im ebenen Bereich der Form 10 mit einem Oberstempel 11 fixiert, der die Mehrschichtfolie 1 e inklusive der Trägerfolie 7 gegen die Form 10 drückt. Die rechts und links neben dem Stempel angeordneten Pfeile symbolisieren ein beheiztes Verformungswerkzeug, das die freien Enden der verstärkten Mehrschichtfolie 1e in Richtung der Form 10 drücken. Dabei erfolgt eine Anpassung der Mehrschichtfolie 1e inklusive der Trägerfolie 7 an die Außenkontur der Form 10 mittels Deformation. Bei diesem Vorgang wird eine Schale 12 ausgebildet, wie sie in Figur 10 schematisch im Querschnitt gezeigt ist.

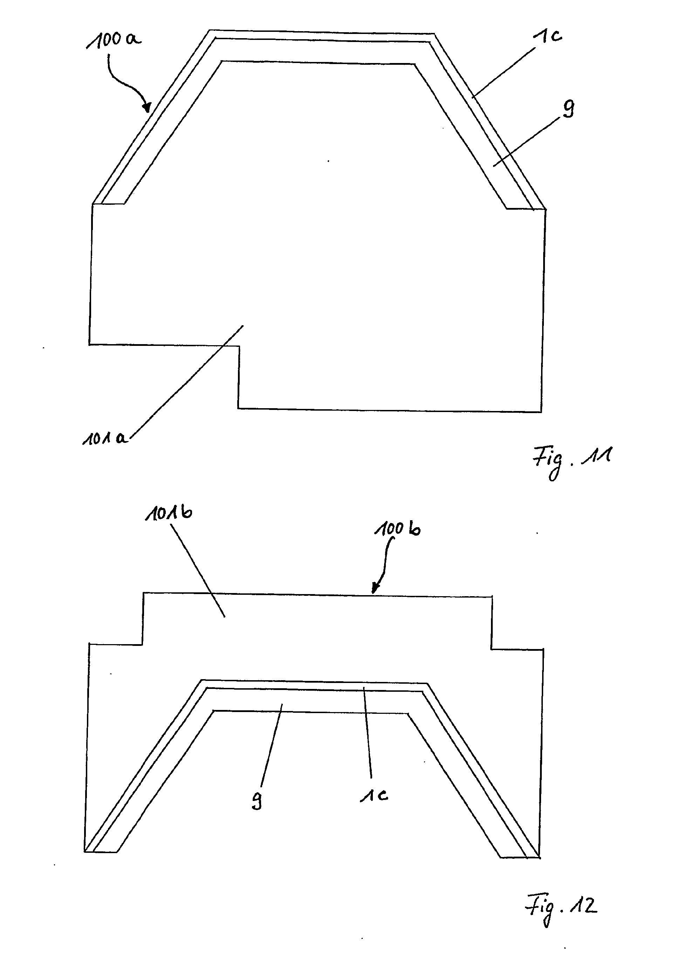

Figur 11 zeigt einen mit der Schale 12 aus Figur 10 dekorierten Spritzgussartikel 100a im Querschnitt. Die Schale 12 wurde in eine Spritzgussform gelegt und auf Seiten der Kunststoffplatte 9 mit opakem Kunststoff hinterspritzt, welcher aushärtet und das Bauteil 101 a ausbildet. Nach Abziehen der Trägerfolie 7 zeigt sich dem Betrachter des dekorierten Spritzgussartikels 100a auf dessen Sichtseite die Mehrschichtfolie 1c.

Figur 12 zeigt einen weiteren mit der Schale 12 aus Figur 10 dekorierten Spritzgussartikel 100b im Querschnitt. Die Schale 12 wurde von der Trägerfolie 7 getrennt und in eine Spritzgussform gelegt. Auf der, der Kunststoffplatte 9 gegenüber liegenden Seite der Schale 12 wurde die Schale mit farblosem, transparentem Kunststoff überspritzt, welcher aushärtet und das Bauteil 101b ausbildet. Dem Betrachter des dekorierten Spritzgussartikels 100b zeigt sich auf der Sichtseite des dekorierten Spritzgussartikels 100b die Mehrschichtfolie 1 c durch das Bauteil 101b aus farblosem transparentem Kunststoff hindurch.

## Patentansprüche

1. Mehrschichtfolie zum Hinterspritzen mit einem flüssigen Kunststoff in einem Inmold-Verfahren zur Herstellung eines dekorierten Spritzgussartikels, insbesondere mit gekrümmten Oberflächen, wobei die Mehrschichtfolie mindestens eine Replizierlackschicht aufweist, welche mindestens auf einer ihrer Oberflächen eine, einen visuell wahrnehmbaren und/oder technischen Effekt erzeugende räumliche Struktur aufweist, wobei an mindestens eine Oberfläche mit räumlicher Struktur angrenzend zumindest bereichsweise eine Kontrastschicht, die vorzugsweise als Reflexionsschicht ausgebildet ist, angeordnet ist,
**dadurch gekennzeichnet,**
**dass** die mindestens eine Replizierlackschicht als eine strahlungsgehärtete Replizierlackschicht ausgebildet ist.

2. Mehrschichtfolie nach Anspruch 1,
**dadurch gekennzeichnet,**
**dass** die strahlungsgehärtete Replizierlackschicht bei Temperaturen oberhalb der Spritztemperatur des zum Hinterspritzen eingesetzten Kunststoffs erweicht.

3. Mehrschichtfolie nach einem der Ansprüche 1 oder 2,
**dadurch gekennzeichnet,**
**dass** die mindestens eine strahlungsgehärtete Replizierlackschicht mittels UV-Strahlung gehärtet ist.

4. Mehrschichtfolie nach einem der Ansprüche 1 bis 3,
**dadurch gekennzeichnet,**
**dass** die Mehrschichtfolie eine Aufnahmeschicht aufweist, die senkrecht zur Ebene der Mehrschichtfolie gesehen vollflächig ausgebildet ist und auf welcher die strahlungsgehärtete Replizierlackschicht lediglich bereichsweise angeordnet ist.

5. Mehrschichtfolie nach einem der Ansprüche 1 bis 4,
**dadurch gekennzeichnet,**
**dass** die Mehrschichtfolie die Übertragungslage einer Transferfolie bildet, wobei die Transferfolie eine von der Mehrschichtfolie ablösbare Trägerfolie aufweist und wobei die Mehrschichtfolie mindestens bereichsweise auf einer Seite der Trägerfolie angeordnet ist.

6. Mehrschichtfolie nach einem der Ansprüche 1 bis 5,
**dadurch gekennzeichnet,**
**dass** die Mehrschichtfolie auf ihrer, der Trägerfolie abgewandten Seite eine Kleberschicht aufweist.

7. Mehrschichtfolie nach einem der Ansprüche 5 oder 6,
**dadurch gekennzeichnet,**
**dass** eine transparente strahlungsgehärtete Replizierlackschicht an die Trägerfolie angrenzt, wobei auf der, der Trägerfolie abgewandten Seite der strahlungsgehärteten Replizierlackschicht die räumliche Struktur eingeprägt ist.

8. Mehrschichtfolie nach Anspruch 7,
**dadurch gekennzeichnet,**
**dass** die Aufnahmeschicht transparent ist und zwischen der Trägerfolie und der strahlungsgehärteten Replizierlackschicht angeordnet ist.

9. Mehrschichtfolie nach einem der Ansprüche 4 bis 8,
**dadurch gekennzeichnet,**
**dass** die strahlungsgehärtete Replizierlackschicht lediglich in Bereichen der Mehrschichtfolie angeordnet ist, die auf dem mit der Mehrschichtfolie dekorierten Spritzgussartikel einen Krümmungsradius von größer als 0,7mm und eine Dehnung von kleiner als 10% aufweisen.

10. Mehrschichtfolie nach einem der Ansprüche 1 bis 9,
**dadurch gekennzeichnet,**
**dass** die Kontrastschicht als Reflexionsschicht ausgebildet ist, die aus metallischen und/oder nicht-metallisch anorganischen reflektiven Materialien gebildet ist.

11. Mehrschichtfolie nach einem der Ansprüche 1 bis 10,
**dadurch gekennzeichnet,**
**dass** die Kontrastschicht erste Bereiche und in der Ebene der Mehrschichtfolie gesehen daneben angeordnet oder teilweise überlappend zu den ersten Bereichen angeordnet mindestens zweite Bereiche aufweist, wobei die Kontrastschicht in den ersten Bereichen und in mindestens den zweiten Bereichen unterschiedlich, insbesondere im Hinblick auf Transparenz und Farbeindruck, ausgestaltet ist.

12. Mehrschichtfolie nach einem der Ansprüche 1 bis 11,
**dadurch gekennzeichnet,**
**dass** die räumliche Struktur zumindest bereichsweise als eine makroskopische Struktur ausgebildet ist, wobei die makroskopische Struktur eine Ausdehnung in der Ebene der strahlungsgehärteten Replizierlackschicht von mindestens 0,03 mm und eine Ausdehnung senkrecht zur Ebene der strahlungsgehärteten Replizierlackschicht in einem Bereich von 0,01 bis 0,1 mm aufweist.

13. Mehrschichtfolie nach einem der Ansprüche 1 bis 12,
**dadurch gekennzeichnet,**
**dass** die räumliche Struktur zumindest bereichsweise als diffraktive Struktur ausgebildet ist.

14. Mehrschichtfolie nach Anspruch 13,
**dadurch gekennzeichnet,**
**dass** die räumliche Struktur zumindest bereichsweise als eine Mattstruktur, insbesondere eine asymmetrische Mattstruktur ausgebildet ist.

15. Mehrschichtfolie nach Anspruch 13,
**dadurch gekennzeichnet,**
**dass** die diffraktive Struktur ein optisch variables Element, insbesondere ein Hologramm, ein Kinegram^{®} oder ein Trustseal^{®} bildet, und lediglich in Bereichen der Mehrschichtfolie angeordnet ist, die auf dem mit der Mehrschichtfolie dekorierten Gegenstand eine Dehnung von kleiner als 10% aufweisen.

16. Mehrschichtfolie nach einem der Ansprüche 1 bis 15,
**dadurch gekennzeichnet,**
**dass** die Mehrschichtfolie eine mittels Laser eingebrachte Markierung, insbesondere in Form von alphanumerischen Zeichen, geometrischen Mustern oder bildlichen Darstellungen, aufweist.

17. Mehrschichtfolie nach einem der Ansprüche 1 bis 16,
**dadurch gekennzeichnet,**
**dass** die Mehrschichtfolie mindestens einen farbigen Dekordruck aufweist.

18. Mehrschichtfolie nach einem der Ansprüche 1 bis 17,
**dadurch gekennzeichnet,**
**dass** die Mehrschichtfolie mindestens einen farblich mit der strahlungsgehärteten Replizierlackschicht übereinstimmenden Dekordruck aufweist, wobei der Dekordruck auf der strahlungsgehärteten Replizierlackschicht angeordnet ist und bereichsweise die räumliche Struktur in der strahlungsgehärteten Replizierlackschicht optisch auslöscht.

19. Mehrschichtfolie nach einem der Ansprüche 1 bis 18,
**dadurch gekennzeichnet,**
**dass** die Mehrschichtfolie als räumliche Struktur Linsenelemente oder Freiformflächen, insbesondere diffraktive Linsen oder diffraktive Freiformflächen, aufweist.

20. Mehrschichtfolie nach einem der Ansprüche 1 bis 19,
**dadurch gekennzeichnet,**
**dass** die Mehrschichtfolie eine schmutzabweisende Schicht und/oder eine kratzfeste Schicht aufweist, die die Oberfläche des dekorierten Spritzgussartikels bildet.

21. Dekorierter Spritzgussartikel mit einem spritzgegossenen Kunststoffkörper, dessen Oberfläche zumindest bereichsweise in einem Inmold-Verfahren mit einer Mehrschichtfolie nach einem der Ansprüche 1 bis 20 bedeckt und verbunden ist.

22. Dekorierter Spritzgussartikel nach Anspruch 21,
**dadurch gekennzeichnet,**
**dass** der dekorierte Spritzgussartikel ein opakes oder zumindest teilweise transparentes Gehäusebauteil eines elektronischen Geräts, insbesondere eines Telefons oder Mobiltelefons bildet.

23. Dekorierter Spritzgussartikel nach Anspruch 21,
**dadurch gekennzeichnet,**
**dass** der dekorierte Gegenstand ein Verkleidungsbauteil für den Innen- oder Außenbereich eines Automobils bildet.

24. Verfahren zur Herstellung eines dekorierten Spritzgussartikels nach einem der Ansprüche 21 bis 23,
**dadurch gekennzeichnet,**
**dass** die Mehrschichtfolie zur Bildung einer mechanisch verstärkten Mehrschichtfolie auf eine ebene, thermoplastische Kunststoffplatte geprägt wird, die mechanisch verstärkte Mehrschichtfolie zu einer Schale thermogeformt wird und dass die Schale in einem Inmold-Verfahren mit einem Kunststoff hinterspritzt wird.

25. Verfahren nach Anspruch 24,
**dadurch gekennzeichnet,**
**dass** die mechanisch verstärkte Mehrschichtfolie beim Thermoformen lediglich in Teilbereichen deformiert wird.

## Claims

1. Multilayer film for back injection with a liquid plastic in an in-mould method for the production of a decorated injection moulded article, in particular with curved surfaces, wherein the multilayer film has at least one replication lacquer layer which has a spatial structure on at least one of its surfaces which produces a visually perceivable and/or technical effect, wherein a contrast layer, which is preferably formed as a reflective layer, is arranged on at least one surface which abuts with the spatial structure at least in regions,
**characterised in that**
the at least one replication lacquer layer is formed as a radiation-hardened replication lacquer layer.

2. Multilayer film according to claim 1,
**characterised in that**
the radiation-hardened replication lacquer layer softens attemperatures above the spray temperature of the plastic used for the back injection.

3. Multilayer film according to one of claims 1 or 2,
**characterised in that**
the at least one radiation-hardened replication lacquer layer is hardened by means of UV radiation.

4. Multilayer film according to one of claims 1 to 3,
**characterised in that**
the multilayer film has a receiving layer which is fully formed seen perpendicularly to the level of the multilayer film and on which the radiation-hardened replication lacquer layer is arranged only in regions.

5. Multilayer film according to one of claims 1 to 4,
**characterised in that**
the multilayer film forms the transfer layer of a transfer film, wherein the transfer film has a carrier film which can be removed from the multilayer film and wherein the multilayer film is arranged at least in regions on one side of the carrier film.

6. Multilayer film according to one of claims 1 to 5,
**characterised in that**
the multilayer film has an adhesive layer on its side which is facing away from the carrier film.

7. Multilayer film according to one of claims 5 or 6,
**characterised in that**
a transparent radiation-hardened replication lacquer layer abuts onto the carrier film, wherein the spatial structure is impressed on the side of the radiation-hardened replication lacquer layer which is facing away from the carrier film.

8. Multilayer film according to claim 7,
**characterised in that**
the receiving layer is transparent and is arranged between the carrier film and the radiation-hardened replication lacquer layer.

9. Multilayer film according to one of claims 4 to 8,
**characterised in that**
the radiation-hardened replication lacquer layer is only arranged in regions of the multilayer film which have a radius of curvature of more than 0.7mm and an elongation of less than 10% on the injection moulded article decorated with the multilayer film.

10. Multilayer film according to one of claims 1 to 9,
**characterised in that**
the contrast layer is formed as a reflective layer which is formed of metallic and/or non-metallic, inorganic reflective materials.

11. Multilayer film according to one of claims 1 to 10,
**characterised in that**
the contrast layer has first regions and at least second regions arranged in the level of the multilayer film seen beside it or arranged to partially overlap the first regions, wherein the contrast layer is designed differently in the first regions and in the at least second regions, in particular with regard to transparency and colour impression.

12. Multilayer film according to one of claims 1 to 11,
**characterised in that**
the spatial structure is formed at least in regions as a macroscopic structure, wherein the macroscopic structure has an expansion in the level of the radiation-hardened replication lacquer layer of at least 0.03mm and an expansion perpendicular to the level of the radiation-hardened replication lacquer layer in the range of 0.01 and 0.1mm.

13. Multilayer film according to one of claims 1 to 12,
**characterised in that**
the spatial structure is formed at least in regions as a diffractive structure.

14. Multilayer film according to claim 13,
**characterised in that**
the spatial structure is formed at least in regions as a matt structure, in particular an asymmetric matt structure.

15. Multilayer film according to claim 13,
**characterised in that**
the diffractive structure forms an optically variable element, in particular a hologram, Kinegram® or a Trustseal®, and is only arranged in the regions of the multilayer film which have an elongation of less than 10% on the object decorated with the multilayer film.

16. Multilayer film according to one of claims 1 to 15,
**characterised in that**
the multilayer film has a marking introduced by means of a laser, in particular in the form of alphanumeric characters, geometric designs or graphic representations.

17. Multilayer film according to one of claims 1 to 16,
**characterised in that**
the multilayer film has at least one coloured decorative print.

18. Multilayer film according to one of claims 1 to 17,
**characterised in that**
the multilayer film has at least one decorative printin which the colour matches the radiation-hardened replication lacquer layer, wherein the decorative print is arranged on the radiation-hardened replication lacquer layer and optically activates the spatial structure in the radiation-hardened replication lacquer layer in regions.

19. Multilayer film according to one of claims 1 to 18,
**characterised in that**
the multilayer film has lens elements or freeform surfaces, in particular diffractive lenses or diffractive freeform surfaces, as the spatial structure.

20. Multilayer film according to one of claims 1 to 19,
**characterised in that**
the multilayer film has a dirt-repellent layer and/or a scratch-resistant layer which forms the surface of the decorated injection moulded article.

21. Decorated injection mouldedarticle having an injection-moulded plastic body, the surface of which is covered by and connected,at least in regions in an in-mould method, with a multilayer film according to one of claims 1 to 20.

22. Decorated injection moulded article according to claim 21,
**characterised in that**
the decorated injection moulded article forms an opaque or at least partially transparent housing component of an electronic device, in particular a telephone or mobile telephone.

23. Decorated injection moulded article according to claim 21,
**characterised in that**
the decorated object forms a casing component for the internal or external region of a car.

24. Method for the production of a decorated injection moulded article according to one of claims 21 to 23,
**characterised in that**
for the formation of a mechanically reinforced multilayer film, the multilayer film is shaped ontoan even, thermoplastic plastic plate, the mechanically reinforced multilayer film is thermoformed to a shell and the shell is back injected with a plastic in an in-mould method.

25. Method according to claim 24,
**characterised in that**
the mechanically reinforced multilayer film is deformed by thermoforming only in partial regions.

## Revendications

1. Film multicouche destiné à être moulé par injection par l'arrière d'une matière plastique liquide lors d'un procédé dans le moule servant à fabriquer un article décoré coulé par injection, en particulier avec des surfaces courbées, sachant que le film multicouche présente au moins une couche de vernis de réplication, qui présente, au moins sur une de ses surfaces, une structure perceptible visuellement et/ou produisant un effet technique, sachant qu'une couche de contraste, qui est réalisée de préférence sous la forme d'une couche réfléchissante, est disposée au moins par endroits de manière adjacente à au moins une surface présentant une structure spatiale,
**caractérisé en ce**
**que** la couche de vernis de réplication au moins au nombre de une est réalisée sous la forme d'une couche de vernis de réplication durcie sous l'effet d'un rayonnement.

2. Film multicouche selon la revendication 1,
**caractérisé en ce**
**que** la couche de vernis de réplication durcie sous l'effet d'un rayonnement ramollit à des températures supérieures à la température d'injection de la matière plastique utilisée aux fins du moulage par injection par l'arrière.

3. Film multicouche selon l'une quelconque des revendications 1 ou 2,
**caractérisé en ce**
**que** la couche de vernis de réplication au moins au nombre de une durcie sous l'effet d' un rayonnement est durcie au moyen d'un rayonnement UV.

4. Film multicouche selon l'une quelconque des revendications 1 à 3,
**caractérisé en ce**
**que** le film multicouche présente une couche d'absorption, qui est réalisée, vue de manière perpendiculaire par rapport au plan du film multicouche, sur toute la surface et sur laquelle la couche de vernis de réplication durcie sous l'effet d'un rayonnement est disposée uniquement par endroits.

5. Film multicouche selon l'une quelconque des revendications 1 à 4,
**caractérisé en ce**
**que** le film multicouche forme la couche à transférer d'un film de transfert, sachant que le film de transfert présente un film de support pouvant être détaché du film multicouche et sachant que le film multicouche est disposé au moins par endroits sur un côté du film de support.

6. Film multicouche selon l'une quelconque des revendications 1 à 5,
**caractérisé en ce**
**que** le film multicouche présente, sur son côté opposé au film de support, une couche adhésive.

7. Film multicouche selon l'une quelconque des revendications 5 ou 6,
**caractérisé en ce**
**qu'**une couche de réplication durcie sous l'effet d'un rayonnement transparente jouxte le film de support, sachant que la structure spatiale est imprimée sur le côté, opposé au film de support, de la couche de vernis de réplication durcie sous l'effet d'un rayonnement.

8. Film multicouche selon la revendication 7,
**caractérisé en ce**
**que** la couche d'absorption est transparente et est disposée entre le film de support et la couche de vernis de réplication durcie sous l'effet d'un rayonnement.

9. Film multicouche selon l'une quelconque des revendications 4 à 8,
**caractérisé en ce**
**que** la couche de vernis de réplication durcie sous l'effet d'un rayonnement est disposée uniquement dans des zones du film multicouche, qui présentent, sur l'article coulé par injection décoré du film multicouche, un rayon de courbure supérieur à 0,7 mm et un allongement inférieur à 10 %.

10. Film multicouche selon l'une quelconque des revendications 1 à 9,
**caractérisé en ce**
**que** la couche de contraste est réalisée sous la forme d'une couche réfléchissante, qui est formée à partir de matériaux métalliques et/ou à partir de matériaux anorganiques non métalliques.

11. Couche multicouche selon l'une quelconque des revendications 1 à 10,
**caractérisé en ce**
**que** la couche de contraste présente des premières zones et au moins des deuxièmes zones disposées à côté vues dans le plan du film multicouche ou disposées selon un chevauchement partiel par rapport aux premières zones, sachant que la couche de contraste est configurée de manière différente dans les premières zones et dans les deuxièmes zones ou plus, en particulier en matière de transparence et d'impression couleur.

12. Film multicouche selon l'une quelconque des revendications 1 à 11,
**caractérisé en ce**
**que** la structure spatiale est réalisée au moins par endroits sous la forme d'une structure macroscopique, sachant que la structure macroscopique présente une extension dans le plan de la couche de vernis de réplication durcie sous l'effet d'un rayonnement d'au moins 0,03 mm et une extension de manière perpendiculaire par rapport au plan de la couche de vernis de réplication durcie sous l'effet d'un rayonnement comprise dans une plage allant de 0,01 à 0,1 mm.

13. Film multicouche selon l'une quelconque des revendications 1 à 12,
**caractérisé en ce**
**que** la structure spatiale est réalisée au moins par endroits sous la forme d'une structure diffractive.

14. Film multicouche selon la revendication 13,
**caractérisé en ce**
**que** la structure spatiale est réalisée au moins en partie sous la forme d'une structure matte, en particulier sous la forme d'une structure matte asymétrique.

15. Film multicouche selon la revendication 13,
**caractérisé en ce**
**que** la structure diffractive forme un élément à variation optique, en particulier un hologramme, un Kinegram^{®} ou un Trustseal^{®}, qui est disposé dans seulement des zones du film multicouche, qui présentent, sur l'objet décoré du film multicouche, un allongement inférieur à 10 %.

16. Film multicouche selon l'une quelconque des revendications 1 à 15,
**caractérisé en ce**
**que** le film multicouche présente un marquage pratiqué au moyen d'un laser, se présentant en particulier sous la forme de caractères alphanumériques, de motifs géométriques ou d'illustrations.

17. Film multicouche selon l'une quelconque des revendications 1 à 16,
**caractérisé en ce**
**que** le film multicouche présente au moins une impression de décoration en couleur.

18. Film multicouche selon l'une quelconque des revendications 1 à 17,
**caractérisé en ce**
**que** le film multicouche présente au moins une impression de décoration dont les couleurs coïncident avec la couche de vernis de réplication durcie sous l'effet d' un rayonnement, sachant que l'impression de décoration est disposée sur la couche de vernis de réplication durcie sous l'effet d'un rayonnement et masque visuellement par endroits la structure spatiale dans la couche de vernis de réplication durcie sous l'effet d'un rayonnement.

19. Film multicouche selon l'une quelconque des revendications 1 à 18,
**caractérisé en ce**
**que** le film multicouche présente, en tant que structure spatiale, des éléments à lentille ou des surfaces de forme libre, en particulier des lentilles diffractives ou des surfaces de forme libre diffractives.

20. Film multicouche selon l'une quelconque des revendications 1 à 19,
**caractérisé en ce**
**que** le film multicouche présente une couche antitaches et/ou une couche résistante aux rayures, qui forme la surface de l'article décoré coulé par injection.

21. Article décoré coulé par injection comprenant un corps en matière plastique coulé par injection, dont la surface est recouverte, au moins par endroits lors d'un procédé dans le moule, par un film multicouche selon l'une quelconque des revendications 1 à 20 et y est reliée.

22. Article décoré coulé par injection selon la revendication 21,
**caractérisé en ce**
**que** l'article décoré coulé par injection forme un composant de boîtier opaque ou au moins en partie transparent d'un appareil électronique, en particulier d'un téléphone ou d'un téléphone mobile.

23. Article décoré coulé par injection selon la revendication 21,
**caractérisé en ce**
**que** l'objet décoré forme un composant d'habillage pour la zone intérieure ou extérieure d'une automobile.

24. Procédé servant à fabriquer un article décoré coulé par injection selon l'une quelconque des revendications 21 à 23,
**caractérisé en ce**
**que** le film multicouche est marqué sur une plaque en plastique thermoplastique plane afin de former un film multicouche à renforcement mécanique, en ce que le film multicouche à renforcement mécanique est transformé par thermoformage en une coque, et en ce que la coque est moulée par injection par l'arrière d'une matière plastique lors d'un procédé dans le moule.

25. Procédé selon la revendication 24,
**caractérisé en ce**
**que** le film multicouche à renforcement mécanique est déformé lors du thermoformage uniquement dans des zones partielles.
